# EUROPÄISCHE PATENTSCHRIFT

(11) **EP 1 937 950 B1**
(45) Veröffentlichungstag und Bekanntmachung des Hinweises auf die Patenterteilung: **08.04.2015**
(21) Anmeldenummer: 06793373.9
(22) Anmeldetag: 08.09.2006
(51) Int. Cl.: F02C 9/28, F23N 5/24

(54) **VERFAHREN ZUM SCHUTZ EINER GASTURBINENANLAGE VOR ÜBERHITZUNG DER HEISSGASFÜHRENDEN TEILE SOWIE ZUR DETEKTION DES FLAMMENLÖSCHENS IN DER BRENNKAMMER**
METHOD FOR PROTECTING THE HOT GAS CARRYING PARTS OF A GAS TURBINE INSTALLATION FROM OVERHEATING AND FOR DETECTING FLAME EXTINCTION IN THE COMBUSTION CHAMBER
PROCEDE POUR PROTEGER UNE INSTALLATION DE TURBINE A GAZ DE LA SURCHAUFFE DES PARTIES QUI SERVENT A L'ACHEMINEMENT DES GAZ CHAUDS, ET POUR DETECTER L'EXTINCTION DE FLAMME DANS LA CHAMBRE DE COMBUSTION

(30) Priorität: 18.10.2005 CH 16782005
(43) Veröffentlichungstag der Anmeldung: 02.07.2008
(73) Patentinhaber: ALSTOM Technology Ltd, 5400 Baden (CH)
(72) Erfinder: ZHANG, Mengbin, CH-8048 Zürich (CH); SPITZMÜLLER, Tobias, CH-5408 Ennetbaden (CH)
(86) Internationale Anmeldenummer: PCT/EP2006/066191
(87) Internationale Veröffentlichungsnummer: WO 2007/045528

(56) Entgegenhaltungen:
- EP-A- 1 327 824
- EP-A2- 0 774 573
- EP-A2- 1 231 369
- EP-A2- 1 531 243
- US-A1- 2004 255 595

## Beschreibung

Die Erfindung bezieht sich auf ein Verfahren zum Schutz einer Gasturbinenanlage vor Überhitzung sowie zur Detektion des Flammenlöschens in der Brennkammer, bei der Luft in einer Kompressoreinheit komprimiert und nach Beimischen mit Brennstoff in Form eines Brennstoff-Luftgemisches in einer Brennkammer gezündet und verbrannt wird, wodurch eine Heißgasströmung entsteht, die stromab der Brennkammer unter Verrichtung von Expansionsarbeit eine Turbinenstufe in Rotation versetzt.

### Stand der Technik

Moderne Gasturbinenanlagen, die zur Erzeugung elektrischer Energie eingesetzt werden, stellen leistungsoptimierte Systeme dar, deren Einzelkomponenten zumeist an ihren materialbedingten Belastbarkeitsgrenzen betrieben werden, so insbesondere jene Komponenten, die unmittelbar dem im Wege des Verbrennungsvorganges innerhalb der Brennkammer entstehenden Heißgasstrom ausgesetzt sind. Dies sind insbesondere die Leit- und Laufschaufeln der Gasturbinenstufe, innerhalb der die aus der Brennkammer austretenden Heißgase bei Maximaltemperaturen von über 1000° C Expansionsarbeit verrichten, durch die die Rotoreinheit angetrieben wird, die letztlich mit einem Generator zur Erzeugung elektrischer Energie verbunden ist. Um zu gewährleisten, dass die den Heißgasen ausgesetzten Gasturbinenkomponenten nicht überhitzen, ist dafür Sorge zu tragen, dass eine sog. vom jeweiligen Gasturbinentyp abhängige maximal zulässige Betriebstemperaturgrenze nicht überschritten wird.

Typischerweise wird hierzu die Turbinenaustrittstemperatur (TAT) gemessen und über geeignete Hilfsgrössen die Turbineneintrittstemperatur (TET) ermittelt. Diese wird im normalen Betrieb durch entsprechende Regelungseingriffe unter einem bestimmten Grenzwert gehalten, um zu verhindern, dass Leit- und Laufschaufeln überhitzen.

Wird dieser Grenzwert aufgrund einer Störung dennoch überschritten, so werden die Komponenten, welche dem Heissgasstrom unmittelbar ausgesetzt sind, thermisch über Gebühr beansprucht, wodurch letztlich die Lebensdauer der gesamten Gasturbinenanlage erheblich reduziert werden kann.

Um eine Überhitzung der Gasturbinenanlage zu vermeiden, ist die Heissgastemperatur vor Eintritt in die Gasturbinenstufe kontinuierlich zu überwachen. Im Falle einer Annäherung der Heißgastemperatur an die maximale Grenztemperatur sind geeignete Maßnahmen zu ergreifen, um einen weiteren Temperaturanstieg zu vermeiden, bspw. in Form einer Notabschaltung der Gasturbinenanlage, indem abrupt die Brennstoffzufuhr unterbunden wird.

Zur Messung der Turbinenaustrittstemperatur werden zumeist Thermoelemente eingesetzt, die systembedingt einer Messträgheit mit Zeitkonstanten im Sekundenbereich unterliegen. Erfolgt der Temperaturanstieg der Heißgase langsam genug, vermögen Thermosensoren eine Annäherung an die maximale Grenztemperatur rechtzeitig zu erfassen, so dass früh genug entsprechende Gegenmaßnahmen eingeleitet werden können. Tritt jedoch eine Überhitzung der Heißgase abrupt und plötzlich auf, bspw. innerhalb von Sekundenbruchteilen, so ist es mit herkömmlichen Thermosensoren problematisch das Überhitzungsereignis rechtzeitig festzustellen. Aus diesem Grunde gilt es nach alternativen Schutz- und Überwachungssystemen zu suchen, mit Hilfe derer eine Überhitzung von Gasturbinenanlagen sicher auszuschliessen ist.

Weiterhin muss für den sicheren Betrieb der Gasturbinenanlage gewährleistet sein, dass der zugeführte Brennstoff innerhalb der Brennkammer vollständig verbrannt wird. Moderne Verbrennungssysteme werden dabei zur Minimierung der Stickoxid-Emissionen mit tiefen Flammtemperaturen sehr nahe an der Löschgrenze betrieben. Bei einer Störung, welche zu einer Absenkung der Flammtemperatur unter einen kritischen Grenzwert führt, kann die Verbrennungsreaktion nicht mehr aufrechterhalten werden, so dass die Flamme ganz oder teilweise löscht. Wird in einem solchen Fall weiterhin Brennstoff zugeführt, so kann dies zu gefährlichen Situationen führen, wenn das Brennstoff/Luftgemisch stromabwärts der Brennkammer, beispielsweise in einer der Gasturbine angekoppelten Kesselanlage zündet.

Aus diesem Grunde muss der Brennkammerbetrieb überwacht werden. Dies geschieht typischerweise mit Hilfe optischer Sensoren, welche über eine Photozelle bestimmte Flammparameter erfassen und mit definierten Grenzwerten vergleichen. Befinden sich die Parameter ausserhalb des erlaubten Betriebsfensters, so wird die Notabschaltung ausgelöst.

Die Aufbereitung und Auswertung der gemessenen Flammparameter benötigt jedoch eine gewisse Verarbeitungszeit, welche bei heutigen Systemen typischerweise im Bereich von 1 sec liegt. Zudem ist eine sichere Detektion nicht immer gewährleistet, wenn die Flamme nicht vollständig, sondern nur teilweise löscht. Letzteres kann jedoch ebenfalls zu potentiellen Schäden an der Anlage führen, wenn beispielsweise die Brennstoffzumessung aufgrund des Leistungsabfalls der Gasturbine, welcher sich bei einem Teillöschen der Flamme einstellt, erhöht wird und die Flamme daraufhin wieder vollständig rückzündet.

Es besteht deshalb der Bedarf nach ergänzenden Massnahmen zur optischen Flammenüberwachung, welche diese Defizite kompensiert.

Aus der EP 0 774 573 A2 ist ein Verfahren bekannt, in dem die Druckfluktuationen, das heisst Schwankungen um einen Druckmittelwert, in einer Brennkammer gemessen werden und der Brennstoffmassenstrom angepasst wird, sobald ein Grenzwert dieser Druckfluktuationen überschritten wird.

Die EP 1 232 369 beschreibt ein Verfahren in dem die Feuerungstemperatur einer Gasturbine in Abhängigkeit von der Abgastemperatur und dem Kompressoraustrittsdruck näherungsweise bestimmt wird. Die Genauigkeit der näherungsweisen Bestimmung wird durch die Berücksichtigung des Wassergehaltes in dem Arbeitsfluid der Gasturbine verbessert.

### Darstellung der Erfindung

Es besteht daher die Aufgabe ein Verfahren zum Schutz einer Gasturbinenanlage vor Überhitzung, bei der Luft in einer Kompressoreinheit komprimiert und nach Beimischen mit Brennstoff in Form eines Brennstoff-Luftgemisches in einer Brennkammer gezündet und verbrannt wird, wodurch eine Heißgasströmung entsteht, die stromab der Brennkammer unter Verrichtung von Expansionsarbeit eine Turbinenstufe in Rotation versetzt, derart anzugeben, dass im Falle einer Störung, welche zu einem sehr raschen Anstieg der Heissgastemperatur führt, eine Notabschaltung der Gasturbinenanlage derart ausgelöst wird, dass eine vom Gasturbinentyp abhängige maximale Heissgastemperatur während des Störfalles nicht überschritten und die Gasturbinenanlage damit vor Schaden bewahrt wird. Zudem soll ein Verfahren gefunden werden, welches es erlaubt, das Löschen der Flamme in der Brennkammer sehr schnell zu erfassen, und darüber hinaus auch ein Teillöschen der Flamme zu detektieren.

Die Lösung der der Erfindung zugrunde liegenden Aufgabe ist im Anspruch 1 angegeben. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Lösungsgemäß zeichnet sich das Verfahren gemäß den Merkmalen des Oberbegriffes des Anspruches 1 dadurch aus, dass der Druck vor der Turbinenstufe gemessen, wobei es sich dabei typischerweise um den Druck in der Brennkammer resp. im Plenum stromaufwärts der Brennkammer handelt. Anschliessend wird die zeitliche Änderung des gemessenen Drucks, der sog. Druckgradient, ermittelt. Ferner wird ein Schwellwert festgelegt, der vorzugsweise in Abhängigkeit der Gasturbine zu wählen ist und der mit dem Druckgradienten oder mit einer von dem Druckgradienten abgeleiteten Größe verglichen wird. Überschreitet der ermittelte Druckgradient und/oder die von dem Druckgradient abgeleitete Größe den Schwellwert, so wird ein Signal generiert wird, das typischerweise zur Notausschaltung der Gasturbinenanlage führt.

Die erfindungsgemässe Idee geht von der Überlegung aus, dass mit der durch eine Brennstoffmengenänderung einhergehende Erhöhung oder Absenkung der Heissgastemperatur parallel auch eine Änderung des Turbinengegendrucks induziert wird.

Da die Druckänderung messtechnisch schneller zu erfassen ist als eine Temperaturänderung, bietet sie sich zur Ableitung einer zusätzlichen Schutzfunktion gegen Überhitzung im Falle einer sehr schnellen und starken Heissgastemperaturerhöhung an. Zudem kann über eine solche Funktion das Verlöschen der Flamme schnell detektiert werden, da dies einem Heissgastemperatursturz und damit einem entsprechenden Abfall des Turbinengegendruckes entspricht.

Physikalisch hängt der Gegendruck der Turbinenstufe einer Gasturbine jedoch nicht alleine vom Feuerungsniveau, sondern auch vom sie durchströmenden Luftmassenstrom ab.

Moderne Gasturbinen sind üblicherweise mit einer oder mehreren verstellbaren Verdichterleitreihen ausgerüstet, welche es erlauben, den Verdichteransaugmassenstrom über den Betriebsbereich der Anlage zu modulieren.

Um nun die durch eine zu hohe oder zu tiefe Heissgastemperatur verursachte Druckänderung von einer Luftmassenstrom-bedingten Druckänderung trennen zu können, muss letztere durch geeignete Massnahmen kompensiert werden. Dies geschieht typischerweise durch die Verwendung der Vorleitreihenposition, der Wellendrehzahl sowie von Umgebungsdruck und Umgebungstemperatur in einer geeigneten Korrekturfunktion.

In einer einfachsten Ausführungsvariante des lösungsgemäßen Verfahrens wird auf der Messung des innerhalb der Brennkammer vorherrschenden Drucks p_{com}, kompensiert mit oben erwähnter Korrekturfunktion, die zeitliche Änderung des gemessenen Druckes, der Druckgradient *ṗ*_{com} ermittelt. Überschreitet bzw. unterschreitet der derart ermittelte Druckgradient einen vorgegebenen positiven respektive negativen Schwellwert, so wird ein Signal generiert, das zu einer Notabschaltung, d.h. Schnellabschaltung der Brennstoffzufuhr, der Gasturbinenanlage führt.

Eine erweiterte Ausführungsvariante des Verfahrens sieht vor, den ermittelten Druckgradienten über ein variabel vorgebbares Zeitfenster zu integrieren, damit allfällige kurzfristige Störungen in der Messkette nicht zu einer irrtümlichen Notabschaltung führen. Hierbei wird der Start- und Endzeitpunkt des Zeitfensters, innerhalb dem der ermittelte und korrigierte Druckgradient integriert wird, durch das Verhalten des jeweils aktuell ermittelten Druckgradienten selbst bestimmt. Die Integration wird ausgelöst sofern der aktuell ermittelte Druckgradient einen vorgegebenen Soll-Start-Druckgradientenwert überschreitet. Die Integrationszeit bzw. das Zeitfenster, innerhalb der der Druckgradient integriert wird, endet zu einem Endzeitpunkt, der in jenem Falle gesetzt wird, sofern der aktuelle ermittelte Druckgradient einen vorgegebenen oberen End-Druckgradientenwert unterschreitet. Der auf diese Weise erhaltene integrale Druckgradient, auch als Inkrement bezeichnet, wird ebenfalls mit einem Schwellwert verglichen, der bei Überschreiten zu dem vorstehend genannten Signal führt, durch das die Notausschaltung der Gasturbinenanlage veranlasst wird.

Das vorbezeichnete Lösungskonzept ist nicht nur bei Gasturbinenanlagen mit einer einzigen Brennkammer anwendbar, sondern auch bei Gasturbinenanlagen mit sequentieller Verbrennung, wobei die Drucke vor den jeweiligen Turbinenstufen separat erfasst und in der beschriebenen Weise ausgewertet werden.

## Patentansprüche

1. Verfahren zum Schutz einer Gasturbinenanlage vor Überhitzung sowie zur Detektierung eines Flammlöschens in der Brennkammer, bei der Luft in einer Kompressoreinheit komprimiert und nach Beimischen mit Brennstoff in Form eines Brennstoff-Luftgemisches in einer Brennkammer gezündet und verbrannt wird, wodurch eine Heissgasströmung entsteht, die stromab der Brennkammer unter Verrichtung von Expansionsarbeit eine Turbinenstufe in Rotation versetzt,
und der Druck vor der Turbinenstufe, d.h. der Druck pₖ der komprimierten Luft im Plenum und/oder der Druck innerhalb der Brennkammer p_{com} gemessen wird, **dadurch gekennzeichnet, dass** eine zeitliche Änderung des gemessenen Drucks, der so genannte Druckgradient ( *ṗ* ) ermittelt wird,
dass wenigstens ein Schwellwert gewählt wird, und
dass der Druckgradient oder eine vom Druckgradienten abgeleitete Größe mit dem wenigstens einen Schwellwert verglichen und bei Überschreiten oder Unterschreiten des Schwellwertes ein Signal generiert wird und das Signal zur Notabschaltung der Gasturbinenanlage führt.

2. Verfahren nach Anspruch 1,
**dadurch gekennzeichnet, dass** die vom Druckgradient abgeleitete Größe durch Integration des ermittelten Druckgradienten innerhalb eines Zeitfensters von variabler Dauer, der so genannten Integrationsdauer, ermittelt wird.

3. Verfahren nach Anspruch 2,
**dadurch gekennzeichnet, dass** das Zeitfenster durch einen Start- und Endzeitpunkt definiert wird, und
dass der Start- und Endzeitpunkt vom ermittelten Druckgradient bestimmt werden.

4. Verfahren nach Anspruch 3,
**dadurch gekennzeichnet, dass** bei Überschreiten eines Soll-Start-Druckgradienten durch den ermittelten Druckgradienten der Startzeitpunkt ausgelöst wird, und dass bei Unterschreiten eines End-Druckgradienten der Endzeitpunkt gesetzt wird.

5. Verfahren nach einem der Ansprüche 2 bis 4,
**dadurch gekennzeichnet, dass** als Schwellwert ein maximaler positiver oder minimaler negativer Integralwert über den Druckgradienten gewählt wird,
dass bei Überschreiten des maximalen positiven oder bei Unterschreiten des minimalen negativen Schwellwertes von einem Inkrementwert, der sich durch die Integration des ermittelten Druckgradienten innerhalb des Zeitfensters ergibt, das Signal generiert wird.

6. Verfahren nach einem der Ansprüche 1 bis 5,
**dadurch gekennzeichnet, dass** eine negative Druckänderung, welche nach Auswertung gemäss obigen Ansprüchen einen negativen Schwellwert unterschreitet, als Kriterium zur Detektierung eines teilweise oder vollständigen Flammenlöschens in der zugeordneten Brennkammer herangezogen wird.

7. Verfahren zum Schutz einer Gasturbinenanlage mit sequentieller Verbrennung mit mehreren Brennkammern mit jeweils zwischengeschalteten Turbinenstufen vor Überhitzung sowie zur Detektierung eines Flammlöschens in einer Brennkammer, bei der Luft in einer Kompressoreinheit komprimiert und nach Beimischen mit Brennstoff in Form eines Brennstoff-Luftgemisches in einer Brennkammer gezündet und verbrannt wird, wodurch eine Heissgasströmung entsteht, die stromab der Brennkammer unter Verrichtung von Expansionsarbeit eine Turbinenstufe in Rotation versetzt,
und der Druck vor der jeder Turbinenstufe, d.h. der Druck pₖ der komprimierten Luft im Plenum und/oder der Druck innerhalb der Brennkammer p_{com} gemessen wird, **dadurch gekennzeichnet, dass** eine zeitliche Änderung des gemessenen Drucks, der so genannte Druckgradient ( *ṗ* ) ermittelt wird,
dass wenigstens ein Schwellwert gewählt wird, und
dass der Druckgradient oder eine vom Druckgradienten abgeleitete Größe mit dem jeweils wenigstens einen Schwellwert verglichen und bei Überschreiten oder Unterschreiten des Schwellwertes ein Signal generiert wird und das Signal zur Notabschaltung der Gasturbinenanlage führt

8. Verfahren nach Anspruch 7,
**dadurch gekennzeichnet, dass** die vom Druckgradient abgeleitete Größe durch Integration des ermittelten Druckgradienten innerhalb eines Zeitfensters von variabler Dauer, der so genannten Integrationsdauer, ermittelt wird.

9. Verfahren nach Anspruch 8,
**dadurch gekennzeichnet, dass** das Zeitfenster durch einen Start- und Endzeitpunkt definiert wird, und
dass der Start- und Endzeitpunkt vom ermittelten Druckgradient bestimmt werden.

10. Verfahren nach Anspruch 9,
**dadurch gekennzeichnet, dass** bei Überschreiten eines Soll-Start-Druckgradienten durch den ermittelten Druckgradienten der Startzeitpunkt ausgelöst wird, und dass bei Unterschreiten eines End-Druckgradienten der Endzeitpunkt gesetzt wird.

11. Verfahren nach einem der Ansprüche 8 bis 10,
**dadurch gekennzeichnet, dass** als Schwellwert ein maximaler positiver oder minimaler negativer Integralwert über den Druckgradienten gewählt wird,
dass bei Überschreiten des maximalen positiven oder bei Unterschreiten des minimalen negativen Schwellwertes von einem Inkrementwert, der sich durch die Integration des ermittelten Druckgradienten innerhalb des Zeitfensters ergibt, das Signal generiert wird.

12. Verfahren nach einem der Ansprüche 7 bis 11,
**dadurch gekennzeichnet, dass** eine negative Druckänderung, welche nach Auswertung gemäss obigen Ansprüchen einen negativen Schwellwert unterschreitet, als Kriterium zur Detektierung eines teilweise oder vollständigen Flammenlöschens in der zugeordneten Brennkammer herangezogen wird.

## Claims

1. Method for protecting a gas turbine installation from overheating and for detecting a flame extinction in the combustion chamber, in which air is compressed in a compressor unit and, after being admixed with fuel, is ignited in the form of a fuel/air mixture in a combustion chamber and is burnt, thus giving rise to a hot gas flow which sets a turbine stage in rotation downstream of the combustion chamber so as to perform expansion work,
and the pressure upstream of the turbine stage, that is to say the pressure pₖ of the compressed air in the plenum and/or the pressure within the combustion chamber p_{com} is measured,
**characterized in that** a time change of the measured pressure, what is known as the pressure gradient (p), is determined,
**in that** at least one threshold value is selected, and **in that** the pressure gradient or a variable derived from the pressure gradient is compared with the at least one threshold value and, if the threshold value is overshot or undershot, a signal is generated and the signal leads to the emergency shutdown of the gas turbine installation.

2. Method according to Claim 1,
**characterized in that** the variable derived from the pressure gradient is determined by the integration of the determined pressure gradient within a time window of variable duration, what is known as the integration duration.

3. Method according to Claim 2,
**characterized in that** the time window is defined by a start and an end time point, and
**in that** the start and the end time point are defined by the determined pressure gradient.

4. Method according to Claim 3,
**characterized in that** the start time point is triggered if the determined pressure gradient overshoots a setpoint start pressure gradient, and **in that** the end time point is set if an end pressure gradient is undershot.

5. Method according to one of Claims 2 to 4,
**characterized in that** a maximum positive or minimum negative integral value is selected as a threshold value via the pressure gradient, and **in that** the signal is generated if an increment value, which is obtained by the integration of the determined pressure gradient within the time window, overshoots the maximum positive threshold value or undershoots the minimum negative threshold value.

6. Method according to one of Claims 1 to 5,
**characterized in that** a negative pressure change which undershoots a negative threshold value after evaluation according to the above claims is used as a criterion for detecting a partial or complete flame extinction in the assigned combustion chamber.

7. Method for protecting a gas turbine installation, with sequential combustion and having a plurality of combustion chambers with interposed turbine stages in each case, from overheating and for detecting a flame extinction in a combustion chamber, in which air is compressed in a compressor unit and, after being admixed with fuel, is ignited in the form of a fuel/air mixture in a combustion chamber and is burnt, thus giving rise to a hot gas flow which sets a turbine stage in rotation downstream of the combustion chamber so as to perform expansion work,
and the pressure upstream of each turbine stage, that is to say the pressure pₖ of the compressed air in the plenum and/or the pressure within the combustion chamber p_{com} is measured,
**characterized in that** a time change of the measured pressure, what is known as the pressure gradient (p), is determined,
**in that** at least one threshold value is selected, and **in that** the pressure gradient or a variable derived from the pressure gradient is compared with the in each case at least one threshold value and, if the threshold value is overshot or undershot, a signal is generated and the signal leads to the emergency shutdown of the gas turbine installation.

8. Method according to Claim 7,
**characterized in that** the variable derived from the pressure gradient is determined by the integration of the determined pressure gradient within a time window of variable duration, what is known as the integration duration.

9. Method according to Claim 8,
**characterized in that** the time window is defined by a start and an end time point, and
**in that** the start and the end time point are defined by the determined pressure gradient.

10. Method according to Claim 9,
**characterized in that** the start time point is triggered if the determined pressure gradient overshoots a setpoint start pressure gradient, and **in that** the end time point is set if an end pressure gradient is undershot.

11. Method according to one of Claims 8 to 10,
**characterized in that** a maximum positive or minimum negative integral value is selected as a threshold value via the pressure gradient, and **in that** the signal is generated if an increment value, which is obtained by the integration of the determined pressure gradient within the time window, overshoots the maximum positive threshold value or undershoots the minimum negative threshold value.

12. Method according to one of Claims 7 to 11,
**characterized in that** a negative pressure change which undershoots a negative threshold value after evaluation according to the above claims is used as a criterion for detecting a partial or complete flame extinction in the assigned combustion chamber.

## Revendications

1. Procédé pour protéger une installation de turbine à gaz contre la surchauffe ainsi que pour détecter une extinction de flamme dans la chambre de combustion, dans laquelle de l'air est comprimé dans une unité de compresseur et, après mélange avec un combustible, est enflammé sous la forme d'un mélange combustible-air dans une chambre de combustion et brûlé, donnant ainsi naissance à un écoulement de gaz chauds qui met un étage de turbine en rotation en aval de la chambre de combustion en développant un travail d'expansion et on mesure la pression avant l'étage de turbine, c'est-à-dire la pression pₖ de l'air comprimé dans le plénum et/ou la pression à l'intérieur de la chambre de combustion p_{com}, **caractérisé en ce que** l'on détermine une variation temporelle de la pression mesurée, appelée le gradient de pression (*ṗ*), **en ce que** l'on choisit au moins une valeur de seuil, et **en ce que** l'on compare le gradient de pression ou une grandeur dérivée du gradient de pression avec ladite au moins une valeur de seuil et, en cas de franchissement vers le haut ou vers le bas de la valeur de seuil, on génère un signal et le signal conduit à la coupure d'urgence de l'installation de turbine à gaz.

2. Procédé selon la revendication 1, **caractérisé en ce que** l'on détermine la grandeur dérivée du gradient de pression par intégration du gradient de pression déterminé à l'intérieur d'un intervalle de temps de durée variable, appelé l'intervalle d'intégration.

3. Procédé selon la revendication 2, **caractérisé en ce que** l'on définit l'intervalle de temps par un instant initial et un instant final, et **en ce que** l'instant initial et l'instant final sont définis par le gradient de pression déterminé.

4. Procédé selon la revendication 3, **caractérisé en ce que**, en cas de franchissement vers le haut d'un gradient de pression initial de consigne par le gradient de pression déterminé, on déclenche l'instant initial et **en ce que**, en cas de franchissement vers le bas d'un gradient de pression final, on fixe l'instant final.

5. Procédé selon l'une quelconque des revendications 2 à 4, **caractérisé en ce que** l'on choisit comme valeur de seuil une valeur intégrale maximale positive ou minimale négative sur le gradient de pression, **en ce que** l'on génère le signal en cas de franchissement vers le haut de la valeur de seuil maximale positive ou en cas de franchissement vers le bas de la valeur de seuil minimale négative par une valeur d'incrément, qui résulte de l'intégration du gradient de pression déterminé à l'intérieur de l'intervalle de temps.

6. Procédé selon l'une quelconque des revendications 1 à 5, **caractérisé en ce que** l'on utilise une variation de pression négative, qui franchit vers le bas une valeur de seuil négative après évaluation selon les revendications précédentes, comme critère pour la détection d'une extinction partielle ou complète de la flamme dans la chambre de combustion associée.

7. Procédé pour protéger une installation de turbine à gaz avec combustion séquentielle avec plusieurs chambres de combustion avec des étages de turbine respectivement intercalés contre la surchauffe ainsi que pour détecter une extinction de flamme dans une chambre de combustion, dans laquelle de l'air est comprimé dans une unité de compresseur et, après mélange avec un combustible, est enflammé sous la forme d'un mélange combustible-air dans une chambre de combustion et brûlé, donnant ainsi naissance à un écoulement de gaz chauds qui met un étage de turbine en rotation en aval de la chambre de combustion en développant un travail d'expansion et on mesure la pression avant chaque étage de turbine, c'est-à-dire la pression pₖ de l'air comprimé dans le plénum et/ou la pression à l'intérieur de la chambre de combustion p_{com}, **caractérisé en ce que** l'on détermine une variation temporelle de la pression mesurée, appelée le gradient de pression (*ṗ*), **en ce que** l'on choisit au moins une valeur de seuil, et **en ce que** l'on compare le gradient de pression ou une grandeur dérivée du gradient de pression avec ladite au moins une valeur de seuil et, en cas de franchissement vers le haut ou vers le bas de la valeur de seuil, on génère un signal et le signal conduit à la coupure d'urgence de l'installation de turbine à gaz.

8. Procédé selon la revendication 7, **caractérisé en ce que** l'on détermine la grandeur dérivée du gradient de pression par intégration du gradient de pression déterminé à l'intérieur d'un intervalle de temps de durée variable, appelé l'intervalle d'intégration.

9. Procédé selon la revendication 8, **caractérisé en ce que** l'on définit l'intervalle de temps par un instant initial et un instant final, et **en ce que** l'instant initial et l'instant final sont définis par le gradient de pression déterminé.

10. Procédé selon la revendication 9, **caractérisé en ce que**, en cas de franchissement vers le haut d'un gradient de pression initial de consigne par le gradient de pression déterminé, on déclenche l'instant initial et **en ce que**, en cas de franchissement vers le bas d'un gradient de pression final, on fixe l'instant final.

11. Procédé selon l'une quelconque des revendications 8 à 10, **caractérisé en ce que** l'on choisit comme valeur de seuil une valeur intégrale maximale positive ou minimale négative sur le gradient de pression, **en ce que** l'on génère le signal en cas de franchissement vers le haut de la valeur de seuil maximale positive ou en cas de franchissement vers le bas de la valeur de seuil minimale négative par une valeur d'incrément, qui résulte de l'intégration du gradient de pression déterminé à l'intérieur de l'intervalle de temps.

12. Procédé selon l'une quelconque des revendications 7 à 11, **caractérisé en ce que** l'on utilise une variation de pression négative, qui franchit vers le bas une valeur de seuil négative après évaluation selon les revendications précédentes, comme critère pour la détection d'une extinction partielle ou complète de la flamme dans la chambre de combustion associée.
